# EUROPEAN PATENT APPLICATION

(11) **EP 3 240 059 A1**
(43) Date of publication of application: **01.11.2017**
(21) Application number: 15873070.5
(22) Date of filing: 22.12.2015
(51) Int. Cl.: H01M 2/02, C08K 3/22, C08K 3/26, C08K 3/34, C08K 3/38, C08L 9/06, C08L 15/00, C08L 53/02

(54) **THERMOPLASTIC ELASTOMER COMPOSITION FOR BATTERY PACK PROTECTIVE MEMBER**

(30) Priority: 25.12.2014 JP 2014262410
(71) Applicant: Riken Technos Corporation, Tokyo 101-8336 (JP)
(72) Inventor: SAKAMOTO, Katsushi, Tokyo 101-8336 (JP)
(74) Representative: Müller-Boré & Partner Patentanwälte PartG mbB
(86) International application number: PCT/JP2015/085832
(87) International publication number: WO 2016/104502

(57) **Abstract**

Provided is a thermoplastic elastomer composition which exhibits excellent flexibility in a wide temperature range from ordinary temperature to low temperature, which has a flame retardancy of V-0 according to the UL94 vertical burning test, without including any halogen-based flame retardant, which is excellent in thermal conductivity, electrical insulation and electrolytic solution resistance, and which can be suitably used in a soft battery pack protection member. The present invention provides a thermoplastic elastomer composition for a battery pack protection member, including 100 parts by mass of a resin composition including (a) 20 to 80% by mass of a hydrogenated product of a copolymer of an aromatic vinyl compound and a conjugated diene compound, and (b) 80 to 20% by mass of a softening material for non-aromatic rubber, in which the total of the component (a) and the component (b) is 100% by mass; (c) 0.1 to 10 parts by mass of a modified resin; and (d) 250 to 400 parts by mass of magnesium hydroxide.

## Description

### [Field of the Invention]

The present invention relates to a thermoplastic elastomer composition. More specifically, the present invention relates to a thermoplastic elastomer composition which exhibits excellent flexibility in a wide temperature range from ordinary temperature to low temperature, which is excellent in flame retardancy, thermal conductivity, electrical insulation and electrolytic solution resistance, and which can be suitably used in a battery pack protection member.

### [Background Art]

Conventionally, vulcanized rubber has been used in a member that is demanded to be flexible and to have rubber elasticity. Vulcanized rubber, however, has been progressively replaced with a thermoplastic elastomer because of having an environmental problem, for example, being a non-recyclable material. While a thermoplastic elastomer composition with a hydrogenated product of a styrene-based thermoplastic elastomer such as a styrene-butadiene block copolymer (SBS) or a styrene-isoprene block copolymer (SIS) has been conventionally known (for example, Patent Literature 1 to 4), there has been obtained no composition satisfying various severe demand characteristics of a battery pack protection member.

A battery pack means a battery including a plurality of single cells connected, and is also called an assembled battery. A secondary battery such as a nickel-cadmium battery, a nickel-hydrogen battery and a lithium ion secondary battery is often used with being installed, as such a battery pack, in equipment. A battery pack has been increasingly used also for equipment having higher rated voltage and rated load current. In addition, for example, there have been promoted an increase in charging speed and saving of a space for housing and securing a battery pack in equipment, and thus the usage environment, state and method of a battery pack have been increasingly severer. Therefore, a battery pack protection member is also demanded to satisfy various demand characteristics at higher levels.

A battery pack is classified to hard and soft battery packs. In a hard battery pack, some single cells combined are housed in a plastic housing case. In a soft battery pack, some single cells combined are covered with a shrink tube. A soft battery pack has the advantage in space-saving as compared with a hard battery pack. Therefore, a material which can be used in a soft battery pack protection member, in particular, a material excellent in shape followability to the main body of a battery pack is demanded.

In recent years, a lithium ion secondary battery has been generally used as a main storage battery. While a lithium ion secondary battery is characterized by being able to be charged rapidly and discharged at a large current as compared with other storage batteries, heat generation during charge and discharge is problematic in terms of safety measures. Therefore, a lithium ion secondary battery is demanded to have heat resistance, to be suppressed in heat generation and heat storage, and also to be promoted in heat dissipation with respect to not only the main body thereof, but also a battery pack protection member.

In addition, a battery pack protection member is demanded to be flexible and to have rubber elasticity in order to prevent the main body of a storage battery from being broken due to impact in falling down. In particular, in recent years, a battery pack of a lithium ion secondary battery has been increasingly installed in an electric car, a hybrid car, an aircraft-related member, various motor-related members, and the like, and a protection member therefor is demanded to be flexible and not to be lost in rubber elasticity in a low-temperature environment.

In addition, while a lithium ion secondary battery is provided with safety accessory parts such as a thermal fuse, a current fuse and a thermistor built in a battery pack, as measures against ignition due to abnormal heat generation of a charger during charge and discharge as well as abnormal heat generation of the battery by external short, a battery pack protection member is also demanded to have flame retardancy.

In addition, a lithium ion secondary battery can cause gas generation due to decomposition of an electrolytic solution or the like depending on the environment, state and method where the battery is used. Gas generation inside the battery is at risk for leading to breakage of the battery and/or external leakage of the electrolytic solution, and also inducing smoking/ignition. Therefore, a battery pack protection member is also demanded to have electrolytic solution resistance and flame retardancy.

Furthermore, a battery pack protection member is demanded to be halogen-free from the viewpoint that a battery small in environment load is developed.

With respect to a "thermally conductive elastomer composition useful in a member for heat dissipation of electric and electronic components and the like", there has been proposed a technique of "compounding a thermally conductive filler including aluminum hydroxide whose surface is covered with an organic coupling agent and/or a thermally conductive filler including magnesium oxide where the surface of a magnesia clinker as inactivated magnesium oxide is covered with an inorganic substance and/or an organic substance, with an elastomer composition mainly including a styrene-based elastomer, to thereby result in an enhancement in thermal conductivity of the elastomer" (Patent Literature 5). Such a composition proposed, however, does not satisfy various severe demand characteristics of a battery pack protection member, in particular, a battery pack protection member of a lithium ion secondary battery.

### [Prior Art Document]

### [Patent Document]

[Patent Document 1] JP-A 58-132032
[Patent Document 2] JP-A 58-145751
[Patent Document 3] JP-A 59-53548
[Patent Document 4] JP-A 62-48757
[Patent Document 5] JP-A 2011-207962

### SUMMARY OF THE INVENTION

### [Problems to be Solved by the Invention]

An object of the present invention is to provide a thermoplastic elastomer composition which exhibits excellent flexibility in a wide temperature range from ordinary temperature to low temperature, which has a flame retardancy of V-0 according to the UL94 vertical burning test, without including any halogen-based flame retardant, which is excellent in thermal conductivity, electrical insulation and electrolytic solution resistance, and which can be suitably used in a battery pack, in particular, a soft battery pack protection member.

### [Means for Solving the Problems]

The present inventor has made intensive studies, and as a result, has found that the above object can be achieved by a specified thermoplastic elastomer composition.

That is, the present invention provides a thermoplastic elastomer composition for a battery pack protection member, comprising:
100 parts by mass of a resin composition comprising
   (a) 20 to 80% by mass of a hydrogenated product of a copolymer of an aromatic vinyl compound and a conjugated diene compound, and
   (b) 80 to 20% by mass of a softening material for non-aromatic rubber,
      wherein the total of the component (a) and the component (b) is 100% by mass;
   (c) 0.1 to 10 parts by mass of a modified resin; and
   (d) 250 to 400 parts by mass of magnesium hydroxide.

A second aspect of the present invention provides the thermoplastic elastomer composition according to the first aspect of the present invention, wherein the component (c) includes a hydrogenated product of a copolymer of an aromatic vinyl compound and a conjugated diene compound, modified by use of maleic anhydride.

A third aspect of the present invention provides the thermoplastic elastomer composition according to the first aspect or the second aspect of the present invention, wherein the component (a) comprises (a-1) 20 to 100% by mass of a hydrogenated product of a block copolymer of styrene and a conjugated diene compound, in which the content of a structural unit derived from styrene is 5 to 40% by mass, and (a-2) 80 to 0% by mass of a hydrogenated product of a random copolymer of styrene and a conjugated diene compound, in which the content of a structural unit derived from styrene is 5 to 40% by mass, and wherein the total of the component (a-1) and the component (a-2) is 100% by mass.

A fourth aspect of the present invention provides the thermoplastic elastomer composition according to any one of the first to third aspects of the present invention, further comprising (e) 25 to 200 parts by mass of a thermally conductive filler including one or more selected from the group consisting of magnesium oxide, magnesium silicate, magnesium carbonate and boron nitride, based on 100 parts by mass of the resin composition.

A fifth aspect of the present invention provides a battery including the thermoplastic elastomer composition according to any one of the first to fourth aspects of the present invention.

### [Effect of the Invention]

The thermoplastic elastomer composition of the present invention exhibits excellent flexibility in a wide temperature range from ordinary temperature to low temperature, has a flame retardancy of V-0 according to the UL94 vertical burning test, without including any halogen-based flame retardant, and is excellent in thermal conductivity, electrical insulation and electrolytic solution resistance. Therefore, the thermoplastic elastomer composition can be suitably used in a protection member of a battery pack, in particular, a soft battery pack.

### DETAILED DESCRIPRION OF THE INVENTION

The thermoplastic elastomer composition of the present invention includes 100 parts by mass of a resin composition including (a) 20 to 80% by mass of a hydrogenated product of a copolymer of an aromatic vinyl compound and a conjugated diene compound, and (b) 80 to 20% by mass of a softening material for non-aromatic rubber, in which the total of the component (a) and the component (b) is 100% by mass.

### Component (a): hydrogenated product of copolymer of aromatic vinyl compound and conjugated diene compound

The component (a) is a hydrogenated product of a copolymer of an aromatic vinyl compound and a conjugated diene compound. The component (a) serves to allow the component (b), the component (d), and the component (e) as an optional component to be favorably included, and allow mechanical properties to be kept.

Examples of the aromatic vinyl compound can include styrene, t-butylstyrene, α-methylstyrene, p-methylstyrene, divinylbenzene, 1,1-diphenylstyrene, N,N-diethyl-p-aminoethylstyrene, vinyltoluene and p-tert-butylstyrene. The aromatic vinyl compound can be used singly or in combination of two or more thereof. Among them, the aromatic vinyl compound is preferably styrene.

The content of the structural unit derived from the aromatic vinyl compound of the component (a) is preferably 70% by mass or less, more preferably 50% by mass or less, further preferably 40% by mass or less, in terms of shape followability and flexibility. In addition, the content is preferably 5% by mass or more in terms of electrolytic solution resistance.

Examples of the conjugated diene compound can include butadiene, isoprene, 1,3-pentadiene, and 2,3-dimethyl-1,3-butadiene. The conjugated diene compound can be used singly or in combination of two or more thereof. The conjugated diene compound is preferably butadiene, isoprene, or a combination of butadiene and isoprene.

The hydrogenation rate (the ratio of the number of bonds as carbon-carbon single bonds obtained by hydrogenation to the number of aliphatic carbon double bonds in the copolymer of the aromatic vinyl compound and the conjugated diene compound before hydrogenation.) of the component (a) is preferably 90% by mole or more, more preferably 95% by mole or more in terms of long-term thermal stability of the thermoplastic elastomer composition. When the component (a) is a mixture of two or more, the hydrogenation rate of the mixture may be in the above range.

The component (a) preferably includes (a-1) 20 to 100% by mass of a hydrogenated product of a block copolymer of styrene and a conjugated diene compound, in which the content of the structural unit derived from styrene is 5 to 40% by mass, and (a-2) 80 to 0% by mass of a hydrogenated product of a random copolymer of styrene and a conjugated diene compound, in which the content of the structural unit derived from styrene is 5 to 40% by mass, in terms of rubber elasticity and molding processability. The component (a) more preferably includes 30 to 70% by mass of the component (a-1) and 70 to 30% by mass of the component (a-2). Herein, the total of the component (a-1) and the component (a-2) is 100% by mass.

The component (a-1) is a hydrogenated product of a block copolymer including at least one polymer block A mainly including an aromatic vinyl compound, and at least one polymer block B mainly including a conjugated diene compound. Examples of the component (a-1) can include respective ones having structures of A-B, A-B-A, B-A-B-A, and A-B-A-B-A.

The polymer block A is a polymer block including only an aromatic vinyl compound, or a copolymer block of an aromatic vinyl compound and a conjugated diene compound. When the polymer block A is the copolymer block, the content of the structural unit derived from the aromatic vinyl compound in the polymer block A is usually 50% by mass or more, and is preferably 70% by mass or more, more preferably 90% by mass or more in terms of electrolytic solution resistance and mechanical properties. The distribution of the structural unit derived from the conjugated diene compound in the polymer block A is any distribution without particular limitation. When two or more of the polymer blocks A are present, these may have the same structure, or may have a different structure from each other.

The polymer block B is a polymer block including only a conjugated diene compound, or a copolymer block of an aromatic vinyl compound and a conjugated diene compound. When the polymer block B is the copolymer block, the content of the structural unit derived from the conjugated diene compound in the polymer block B is usually 50% by mass or more, and is preferably 70% by mass or more, more preferably 90% by mass or more in terms of flexibility and mechanical properties. The distribution of the structural unit derived from the aromatic vinyl compound in the polymer block B is any distribution without particular limitation. The binding mode (hereinafter, sometimes abbreviated as "microstructure".) of the conjugated diene compound and the conjugated diene compound is any mode without particular limitation. When two or more of the polymer blocks B are present, these may have the same structure, or may have a different structure from each other.

The content of the structural unit derived from the aromatic vinyl compound in the component (a-1) is preferably 5 to 40% by mass, more preferably 10 to 30% by mass in terms of shape followability, flexibility, electrolytic solution resistance, shape stability of a molded article, and molding processability.

The mass-average molecular mass (Mw) of the component (a-1), in terms of polystyrene, determined from a differential molecular mass distribution curve obtained by gel permeation chromatography measurement is preferably 5,000 to 1,500,000, more preferably 10,000 to 550,000. The ratio (Mw/Mn) of the mass-average molecular mass (Mw) to the number-average molecular mass (Mn) is preferably 1 to 10. When the Mw and Mw/Mn of the component (a-1) are in the above ranges, extrusion molding processability is improved.

The component (a-1), in which the aromatic vinyl compound is styrene, may include any aromatic vinyl compound other than styrene as long as the amount of such other aromatic vinyl compound is small.

Examples of the component (a-1) can include a styrene-ethylene/butene-styrene copolymer (SEBS), a styrene-ethylene/propylene-styrene copolymer (SEPS), a styrene-ethylene/ethylene/propylene-styrene copolymer (SEEPS), a styrene-butadiene/butylene-styrene copolymer (partially hydrogenated styrene-butadiene-styrene copolymer, SBBS) and a styrene-ethylene/butene-crystalline ethylene block copolymer (SEBC). Examples of a commercially available product of the component (a-1) can include "SEPTON (trade name)" produced by Kuraray Co., Ltd., "Kraton G (trade name)" produced by Kraton Corporation and "Tuftec Polymer (trade name)" produced by Asahi kasei Corporation. The component (a-1) can be used singly or as a mixture of two or more thereof.

The component (a-2) is a hydrogenated product of a random copolymer of an aromatic vinyl compound and a conjugated diene compound.

The content of the structural unit derived from the aromatic vinyl compound in the component (a-2) is preferably 5 to 40% by mass, more preferably 10 to 30% by mass in terms of shape followability, flexibility, electrolytic solution resistance, shape stability of a molded article, and molding processability.

The component (a-2) is preferably any component where the temperature at the peak of the tensile loss tangent is observed in the range from -50°C to 0°C as a single peak in the dynamic solid viscoelasticity test according to JIS K7244-4:1999. Such a component (a-2) can be used to thereby extend a selectable range of the amount of the component (b) to be compounded, resulting in an improved balance between flexibility, in particular, flexibility at low temperatures, and followability to the shape of a battery pack.

The mass-average molecular mass (Mw) of the component (a-2), in terms of polystyrene, determined from a differential molecular mass distribution curve obtained by gel permeation chromatography measurement is preferably 5,000 to 1,000,000, more preferably 10,000 to 350,000. The ratio (Mw/Mn) of the mass-average molecular mass (Mw) to the number-average molecular mass (Mn) is preferably 1 to 10. When the Mw and Mw/Mn of the component (a-2) are in the above ranges, extrusion molding processability is improved.

The component (a-2), in which the aromatic vinyl compound is styrene, may include any aromatic vinyl compound other than styrene as long as the amount of such other aromatic vinyl compound is small.

Examples of a commercially available product of the component (a-2) can include "DYNARON 1320P (trade name)" (hydrogenated styrene-butadiene random copolymer, mass-average molecular mass = 300000, Mw/Mn = 1.1) produced by JSR Corporation. The component (a-2) can be used singly or as a mixture of two or more thereof.

### Component (b): softening material for non-aromatic rubber

The component (b) serves to impart flexibility and shape followability to the thermoplastic elastomer composition of the present invention, resulting in a reduction in extrusion load at the time of molding processing.

The component (b) is non-aromatic mineral oil (hydrocarbon compound derived from petroleum or the like) or synthetic oil (synthetic hydrocarbon compound), and is usually in the form of liquid, gel or gum at ordinary temperature. The "non-aromatic mineral oil" here means mineral oil not classified to aromatics in the following classification (means that the proportion of aromatic carbon atoms in mineral oil is less than 30%). The "non-aromatic synthetic oil" here means synthetic oil obtained without any aromatic monomer.

The mineral oil for use as the softening agent for rubber is a mixture where any one or more of a paraffin chain, a naphthene ring and an aromatic ring are combined. Such a mixture is distinguished as follows: one where the proportion of naphthene ring carbon atoms is 30 to 45% is called naphthene-based oil, one where the proportion of aromatic carbon atoms is 30% or more is called aromatic oil, and one belonging to neither naphthene-based oil nor aromatic oil, where the proportion of paraffin chain carbon atoms in the total of carbon atoms is 50% or more, is called paraffin-based oil.

Examples of the components (b) can include paraffin-based mineral oil such as linear saturated hydrocarbon, branched saturated hydrocarbon, and derivatives thereof; naphthene-based mineral oil; and synthetic oil such as hydrogenated polyisobutylene, polyisobutylene, and polybutene. Examples of a commercially available product of the component (b) can include isoparaffin-based hydrocarbon oil "NA Solvent (trade name)" produced by NOF Corporation, n-paraffin-based process oil "PW-90 (trade name)" and "PW-380 (trade name)" produced by Idemitsu Kosan Co., Ltd., synthetic isoparaffin-based hydrocarbon "IP-Solvent 2835 (trade name)" produced by Idemitsu Petrochemical Co., Ltd., and n-paraffin-based process oil "Neothiozol (trade name)" produced by Sanko Chemical Industry Co., Ltd. Among them, paraffin-based mineral oil is preferable, and paraffin-based mineral oil of which the proportion of aromatic carbon number is low is more preferable in terms of compatibility. In addition, one which is in the form of liquid at room temperature is preferable in terms of handleability. The component (b) can be used singly or as a mixture of two or more thereof.

The thermoplastic elastomer composition of the present invention includes 100 parts by mass of a resin composition including 20 to 80% by mass of the component (a) and 80 to 20% by mass of the component (b), from the viewpoint of exhibiting flame retardancy, thermal conductivity, electrical insulation, electrolytic solution resistance, flexibility, flexibility at low temperatures, and extrusion molding processability in a well-balanced manner, in particular, in terms of flexibility, extrusion molding processability and electrolytic solution resistance. The thermoplastic elastomer composition preferably includes 100 parts by mass of a resin composition including 40 to 60% by mass of the component (a) and 60 to 40% by mass of the component (b). The total of the component (a) and the component (b) is here 100% by mass.

### Component (c): modified resin

The component (c) is a modified product obtained by modifying a hydrophobic resin by use of a compound having an aliphatic carbon double bond and a hydrophilic functional group.

The component (c) has the structural unit derived from the compound having an aliphatic carbon double bond and a hydrophilic functional group, and thus can strongly interact with the component (d) and the component (e). In addition, the component (c) has the structural unit derived from the hydrophobic resin, and thus can strongly interact with the component (a). Therefore, the component (c) can. be used to thereby allow the component (a) to be sufficiently admixed with the component (d) and the component (e).

Examples of the hydrophilic functional group include a carboxyl group, a carbonyl group, a hydroxyl group, a sulfonyl group, an amino group, a silanol group, an isocyanate group, a thiol group, an ether group, an ester group and an epoxy group. The compound having an aliphatic carbon double bond and a hydrophilic functional group has one or more of these groups.

Among them, the hydrophilic functional group is preferably an acidic hydrophilic functional group such as a carboxyl group and a sulfonyl group because the component (d) is an alkaline substance. In addition, the component (d) is a salt including a hydroxide ion, and thus the hydrophilic functional group is preferably a hydrophilic functional group having reactivity with the salt including a hydroxide ion, such as a silanol group, an isocyanate group and an epoxy group.

Examples of the compound having an aliphatic carbon double bond and a hydrophilic functional group can include an unsaturated carboxylic acid, derivatives of unsaturated carboxylic acid, an unsaturated silane coupling agent, a compound having an aliphatic carbon double bond and an epoxy group, an unsaturated amine, a compound having an aliphatic carbon double bond and isocyanate, and a compound having an aliphatic carbon double bond and a hydroxyl group.

Examples of the unsaturated carboxylic acid can include maleic acid, itaconic acid, fumaric acid, acrylic acid and methacrylic acid.

Examples of the derivatives of unsaturated carboxylic acid can include maleic acid monoester, maleic acid diester, maleic anhydride, itaconic acid monoester, itaconic acid diester, itaconic anhydride, fumaric acid monoester, fumaric acid diester, fumaric anhydride, an alkyl acrylate such as methyl acrylate, and an alkyl methacrylate such as methyl methacrylate.

Examples of the unsaturated silane coupling agent can include vinyl silane coupling agents such as vinyltrimethoxysilane and vinyltriethoxysilane; (meth)acrylic silane coupling agents such as 3-acryloxypropyltrimethoxysilane, 3-methacryloxypropyltrimethoxysilane, 3-methacryloxypropyltriethoxysilane, 3-methacryloxypropylmethyldimethoxysilane and 3-methacryloxypropylmethyldiethoxysilane; and styryl silane coupling agents such as p-styryltrimethoxysilane.

Examples of the compound having an aliphatic carbon double bond and an epoxy group can include glycidyl methacrylate, glycidyl acrylate, 4-epoxy-1-butene, 6-epoxy-1-hexene, 8-epoxy-1-octene, 10-epoxy-1-decene and 4-hydroxybutyl (meth)acrylate glycidyl ether.

Examples of the unsaturated amine can include allylamine (3-amino-1-propene) and 6-amino-1-hexene.

Examples of the compound having an aliphatic carbon double bond and isocyanate can include 2-isocyanatoethyl methacrylate and 2-isocyanatoethyl acrylate.

Examples of the compound having an aliphatic carbon double bond and a hydroxyl group can include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; and hydroxyl group-containing α-olefins such as 3-buten-1-ol, 5-hexen-1-ol and 7-octen-1-ol.

Among them, the compound having an aliphatic carbon double bond and a hydrophilic functional group is preferably maleic anhydride or an unsaturated amine.

Herein, the term "(meth)acrylic" means acrylic or methacrylic.

Examples of the hydrophobic resin modified by use of the compound having an aliphatic carbon double bond and a hydrophilic functional group can include a polyethylene-based resin, a polypropylene-based resin, a polyolefin-based elastomer, a copolymer of an aromatic vinyl compound and a conjugated diene compound, and a hydrogenated product of a copolymer of an aromatic vinyl compound and a conjugated diene compound.

Examples of the polyethylene-based resin can include high density polyethylene, medium density polyethylene, low density polyethylene, linear low density polyethylene, and a copolymer (including a random copolymer and a block copolymer.) of ethylene and α-olefin (for example, propylene, 1-butene, 1-pentene, 1-hexene, and 1-octene).

Examples of the polypropylene-based resin can include a propylene homopolymer, and a copolymer (including a random copolymer and a block copolymer.) of propylene and α-olefin (for example, ethylene, 1-butene, 1-pentene, 1-hexene, and 1-octene).

Examples of the olefin-based elastomer can include a copolymer (including a random copolymer and a block copolymer.) of ethylene and α-olefin (for example, propylene, 1-butene, 1-pentene, 1-hexene, and 1-octene), and a terpolymer of ethylene, an α-olefin (for example, propylene, 1-butene, 1-pentene, 1-hexene, and 1-octene) and an unconjugated diene (for example, 1,4-hexadiene, 5-ethylidene-2-norbornene, 5-vinylnorbornene, and dicyclopentadiene).

Examples of the copolymer of an aromatic vinyl compound and a conjugated diene compound can include a styrene-butadiene-styrene block copolymer (SBS) and a styrene-isoprene-styrene block copolymer (SIS).

Examples of the hydrogenated product of a copolymer of an aromatic vinyl compound and a conjugated diene compound can include those exemplified in the description of the component (a).

The component (c) can be obtained by modifying the above hydrophobic resin singly or as a mixture of two or more thereof by use of the compound having an aliphatic carbon double bond and a hydrophilic functional group singly or as a mixture of two or more thereof by any method (graft-polymerizing the compound having an aliphatic carbon double bond and a hydrophilic functional group to the hydrophobic resin composition).

Examples of the component (c) can include maleic anhydride-modified polyethylene, acrylic acid-modified polyethylene, maleic anhydride-modified polypropylene, and a maleic anhydride-modified styrene-ethylene/butene-styrene copolymer. Examples of a commercially available product of the component (c) can include "Admer (trade name)" produced by Mitsui Chemicals, Inc., "UMEX (trade name)" produced by Sanyo Chemical Industries, Ltd. and "Tuftec M1913 (trade name)" produced by Asahi Kasei Chemicals Corporation.

The component (c) is preferably a hydrogenated product of a copolymer of an aromatic vinyl compound and a conjugated diene compound, modified by use of maleic anhydride, in terms of miscibility. The component (c) can be used singly or as a mixture of two or more thereof.

The amount of the component (c) to be compounded is 0.1 to 10 parts by mass, preferably 1 to 8 parts by mass based on 100 parts by mass of the total of the component (a) and the component (b), in terms of miscibility and molding processability.

### Component (d): magnesium hydroxide

The component (d) has a key role in imparting flame retardancy. The component (d) also has an effect of enhancing thermal conductivity of the composition. Since magnesium hydroxide is more excellent in electrical insulation than general flame retardants such as a halogen-based flame retardant and a phosphorous flame retardant, it is suitable for imparting flame retardancy to a resin composition for use in a battery pack protection member. While magnesium hydroxide having a different particle size and surface-treated magnesium hydroxide are commercially available, magnesium hydroxide having any properties may be used as the component (d).

The amount of the component (d) to be compounded is 250 to 400 parts by mass, preferably 260 to 380 parts by mass based on 100 parts by mass of the total of the component (a) and the component (b), in terms of a balance among flame retardancy and thermal conductivity, and productivity of the thermoplastic elastomer composition and a molded article.

### Component (e): thermally conductive filler

The thermoplastic elastomer composition of the present invention preferably further includes a component (e): thermally conductive filler. A thermally conductive filler can be generally classified to one having conductivity and one having electrical insulation. There are also various fillers surface-treated in consideration of mixability with a resin, and such fillers are separately used depending on the intended use. Furthermore, the shape of such a filler includes powdery, fibrous and scale-like shapes. Among them, the component (e) is preferably a thermally conductive filler having high electrical insulation, in consideration of properties demanded by a battery pack protection member. In addition, a non-fibrous shape is also preferable in consideration of anisotropy of thermal conductivity, and a powdery shape is more preferable. Specifically, the component (e) is preferably magnesium silicate, magnesium oxide, magnesium carbonate, boron nitride, or the like. The component (e) can be preferably used singly or in combination of two or more thereof.

When the component (e) is used, the amount thereof to be compounded is preferably 25 to 200 parts by mass, more preferably 100 to 180 parts by mass based on 100 parts by mass of the total of the component (a) and the component (b), in terms of a balance between electrical insulation and thermal conductivity.

### Component (f1): optional component 1 "polyphenylene ether-based resin"

The thermoplastic elastomer composition of the present invention can further include a component (f1): polyphenylene ether-based resin. While a polyphenylene ether resin is known to be an engineering plastic excellent in heat resistance, electrical properties and chemical resistance, and to be completely compatible with polystyrene, the resin has the disadvantages in being poor in fluidity and being difficult to molding process. Therefore, such a resin is commonly used in the form of a styrene-modified polyphenylene ether resin to which a polystyrene-based resin is compounded for the purpose of improvements in molding processability, fluidity and impact resistance. The thermoplastic elastomer composition of the present invention can further include the component (f1) in an amount of 2 to 8 parts by mass based on 100 parts by mass of the total of the component (a) and the component (b), thereby resulting in an enhancement in electrolytic solution resistance, in particular, dissolution resistance to an electrolytic solution at high temperatures. The polyphenylene ether resin or the styrene-modified polyphenylene ether resin may be used as the component (f1).

### Component (f2): optional component 2 "polypropylene-based resin"

The thermoplastic elastomer composition of the present invention can further include a component (f2): polypropylene-based resin. The thermoplastic elastomer composition can include the component (f2) in an amount of 1 to 10 parts by mass based on 100 parts by mass of the total of the component (a) and the component (b), thereby resulting in enhancements in electrolytic solution resistance and molding processability.

Examples of the component (f2) can include a propylene homopolymer and a copolymer (including a random copolymer and a block copolymer.) of propylene and an α-olefin (for example, ethylene, 1-butene, 1-pentene, 1-hexene, and 1-octene). The component (f2) can be used singly or as a mixture of two or more thereof.

The melting point (Tm) of the component (f2), measured by a differential scanning calorimeter (DSC), is preferably 120 to 167°C in terms of electrolytic solution resistance and molding processability. The melting point (Tm) measured by a differential scanning calorimeter (DSC) refers to the peak top melting point at the highest temperature on the second melting curve (melting curve obtained by measurement in the last temperature rising process) obtained by measurement with a program where the temperature is kept at 230°C for 5 minutes, dropped to -10°C at 10°C/min, kept at -10°C for 5 minutes and raised to 230°C at 10°C/min by use of a Diamond DSC differential scanning calorimeter manufactured by PerkinElmer Japan Co., Ltd.

The melt mass flow rate (measured under conditions of 230°C and a load of 21.18 N according to ASTM D-1238.) of the component (f2) is preferably 0.1 to 10 g/10 min from the viewpoint of improving the appearance of a molded article.

### Component (f3): optional component 3 "polyvinyl acetate-based resin"

The thermoplastic elastomer composition of the present invention can further include a component (f3): polyvinyl acetate-based resin. The thermoplastic elastomer composition can include the component (f3) in an amount of 1 to 10 parts by mass based on 100 parts by mass of the total of the component (a) and the component (b), thereby resulting in an enhancement in molding processability.

Examples of the component (f3) can include a vinyl acetate homopolymer and a copolymer of vinyl acetate and a monomer copolymerizable with vinyl acetate (for example, an α-olefin such as ethylene, propylene, 1-butene, 1-pentene, 1-hexene and 1-octene; an unsaturated carboxylic acid such as methacrylic acid, acrylic acid, maleic acid, fumaric acid and itaconic acid; an unsaturated carboxylic acid derivative such as methacrylic acid ester, acrylic acid ester and maleic anhydride; and vinyl chloride). Among them, the component (f3) is preferably an ethylene-vinyl acetate copolymer in which the content of the structural unit derived from vinyl acetate is 20 to 60% by mass. The component (f3) can be used singly or as a mixture of two or more thereof.

The thermoplastic elastomer composition of the present invention can further include, if desired, any inorganic filler other than the component (d) and the component (e). An inorganic filler has not only the effect of improving some physical properties of a molded article, but also an economic advantage due to an increase in quantity. Examples of the inorganic filler can include calcium carbonate, talc, mica, clay, barium sulfate, natural silicic acid, synthetic silicic acid (white carbon), titanium oxide and carbon black. The amount of the inorganic filler to be compounded can be arbitrarily set as long as the object of the present invention is not impaired.

The thermoplastic elastomer composition of the present invention can further include, if desired, various anti-blocking agents, sealing property improvers, softening agents for rubber, heat stabilizers, antioxidants, ultraviolet absorbers, antistatic agents, lubricants, crystal nucleating agents, colorants, and the like. The amount of such component(s) to be compounded can be arbitrarily set as long as the object of the present invention is not impaired.

Examples of the antioxidants can include phenolic antioxidants such as 2,6-di-tert-p-butyl-p-cresol, 2,6-di-tert-butylphenol, 2,4-dimethyl-6-tert-butylphenol, 4,4-dihydroxydiphenyl and tris(2-methyl-4-hydroxy-5-tert-butylphenyl)butane, phosphite antioxidants, and thioether antioxidants. Among them, phenolic antioxidants and phosphite antioxidants are preferable.

The thermoplastic elastomer composition of the present invention can be produced by melt-kneading the components (a) to (d), and other optional component(s) in any order or at the same time. The melt-kneading method is not particularly restricted, and a known method can be used therefor. For example, a single screw extruder, a twin screw extruder, a roll, a mixer or various kneaders can be used. When a mixer or a kneader is used, for example, melt-kneading is preferably conducted under a condition of a discharge temperature of 170 to 240°C. When a biaxial kneader is used, for example, melt-kneading is preferably conducted under conditions of a screw rotation speed of 50 to 500 rpm and a kneading temperature of 170 to 240°C.

### EXAMPLES

Hereinafter, the present invention is described with reference to Examples, but the present invention is not limited thereto.

### Examples 1 to 32 and Comparative Examples 1 to 12

A pressure kneader having a volume of 20 L was used to melt-knead a compounded product having any compounding ratio shown in any one of Tables 1 to 7, under a condition of a discharge temperature of 175°C. The resulting composition was subjected to a hot cutting method under a condition of a dice setting temperature of 210°C to provide a pellet. Subsequently, the resulting pellet was hot pressed by using a heating press machine under conditions of a temperature of 220°C, a pre-heating time of 3 minutes and a pressurizing time of 3 minutes, and immediately thereafter cold pressed under conditions of a temperature of 30°C and a pressurizing time of 3 minutes to provide a press sheet having a thickness of 1 mm. The same manner was performed to provide respective press sheets having thicknesses of 2 mm, 3 mm, and 6 mm. The productivity of the above process was evaluated according to the following criteria. In addition, the following tests (3) to (8) were performed. The results are shown in any one of Tables 1 to 7.

### (1) Productivity:

- ○:: there was no particular problem, and good press sheets having respective thicknesses could be obtained.
- Δ:: there was no particular problem, and good press sheets having respective thicknesses could be obtained, but discoloration was observed in the press sheets.
- ×:: at least any one of the following failures was caused during the process.
- Melt-kneading by the pressure kneader was not stabilized due to an overload.
- No pellet could be made.
- Decomposed gas was generated.
- The press sheets were remarkably discolored.

Evaluation criteria: Rating "○" was defined as pass.

### (2) Torque of biaxial extruder:

- ○:: there was no problem at all.
- Δ:: the torque reached close to the upper limit.
- ×:: variation in the rotation speed (variation in the amount of extrusion) or stopping of the screw due to overtorque was observed.
Evaluation criteria: Rating "○" was defined as pass.

### Measurement methods

### (3) Electrical insulation:

The press sheet having a thickness of 1 mm obtained above was used as a sample and subjected to measurement by a double ring method according to JIS K6271:2008.
Evaluation criteria: An electrical insulation of 10¹⁴ Ωcm or more was defined as pass.

### (4) Thermal conductivity:

The press sheet having a thickness of 6 mm obtained above was used as a sample and subjected to measurement with "Kemtherm QTM-D3 (trade name)" manufactured by Kyoto Electronics Manufacturing Co., Ltd. as a measurement apparatus under a condition of 25°C (room temperature) according to the hot wire method prescribed in JIS R2616:2001. The direction of thermal conduction was the thickness direction of a test piece. (Evaluation criteria) A thermal conductivity of 1.2 W/(m·K) or more was defined as pass.

### (5) Flame retardancy:

Measurement was performed according to the UL94 vertical burning test method. The press sheet having a thickness of 1 mm obtained above was used as a sample.
Evaluation criteria: Any sample rated as V-0 was defined as pass.

### (6) Extrusion molding processability:

Extrusion molding processing of a tube was performed by using an apparatus where a 40-mm single screw extruder was equipped with a screw having a compression ratio (CR) of 2.7 and a tube mold having an outer diameter of 7 mm and a thickness of 1 mm, under conditions of a screw rotation speed of 15 r.p.m, a resin temperature at the outlet of the mold of 230°C and a draw down ratio (calculated as the proportion of the thickness of the mold relative to the thickness of the resulting tube.) of 1.3. The extrusion molding processability and the appearance of a molded article were evaluated according to the following evaluation criteria.

### (6-1) Uneven thickness:

- ○:: uneven thickness was not observed and the resulting molded article was according to the predetermined dimension.
- Δ:: variation in discharge (surging) was slightly observed, and uneven thickness was partially caused.
- x:: variation in discharge (surging) was remarkably observed, and uneven thickness was severe.

### (6-2) Extrusion torque;

- ○:: there was no problem at all.
- Δ:: a high load caused the torque to reach close to the upper limit.
- ×:: variation in the rotation speed (variation in the amount of extrusion) of the screw due to overtorque was observed.

### (6-3) Appearance of molded article (tube):

- ○:: poor appearance such as roughness was not observed on the tube surface.
- Δ:: poor appearance such as roughness was partially observed on the tube surface.
- x:: poor appearance such as roughness was remarkably observed on the tube surface.
Evaluation criteria: Rating "○" was defined as pass.

### (7) Flexibility (shape followability):

The extruded tube molded in the test (6) was cut to a length of 40 mm and conditioned under an environment of a temperature of 23°C and a relative humidity of 50% for 24 hours or more, and thereafter the tube was installed in a size AA battery under the same environment so that no gap was generated between the tube and the battery.
- ○:: the tube could be easily installed and no gap was generated between the tube and the battery.
- Δ:: the tube was hardly installed, but no gap was generated between the tube and the battery.
- x:: the tube could not be installed or was very hardly installed, and any gap was generated between the tube and the battery.
Evaluation criteria: Rating "○" was defined as pass.

### (8) High-temperature deformation:

The installed product where the tube was installed in the size AA battery, obtained in the test (7), was exposed in an environment of 70°C for 24 hours and conditioned under an environment of a temperature of 23°C and a relative humidity of 50% for 24 hours or more, and thereafter whether or not any gap was generated between the tube and the battery was visually observed. The test was here omitted with respect to any products rated as "x" in the test (7).
- ○:: no problem
- Δ:: fine gap was generated between the tube and the battery.
- ×:: any gap was generated between the tube and the battery.
Evaluation criteria: Rating "○" was defined as pass.

### (9) Low-temperature flexibility:

The installed product after the test (8) was further exposed in an environment of -30°C for 24 hours and conditioned under an environment of a temperature of 23°C and a relative humidity of 50% for 24 hours, and thereafter whether or not any gap was generated between the tube and the battery was visually observed. The test was here omitted with respect to any products rated as "×" in the test (7) and any products rated as "×" in the test (8).
- ○:: no problem
- Δ:: fine gap was generated between the tube and the battery.
- ×:: any gap was generated between the tube and the battery.
Evaluation criteria: Rating "○" was defined as pass.

### (10) Electrolytic solution resistance:

The press sheet having a thickness of 1 mm obtained above was immersed in an aqueous lithium hexafluorophosphate solution (lithium salt concentration: 1 mol/L) at a temperature of 80°C for 2 hours, and thereafter the state thereof was visually observed. In addition, a sample including a polyphenylene ether resin was tested in the same manner also under a condition where immersion at 100°C was made for 2 hours. The evaluation criteria are as follows.
- ○:: there was no change at all.
- Δ:: the sheet was slightly changed in shape or swollen.
- ×:: the sheet was partially dissolved.
Evaluation criteria: Rating "○" was defined as pass.

### (11) Durometer hardness:

The durometer hardness of type A at 15 seconds was measured according to JIS K6253-3:2012. The press sheet having a thickness of 6 mm obtained above was used as a sample. (Evaluation criteria) A durometer hardness of 80 or less was defined as pass.

### (12) Bleed-out resistance:

The tube molded in the test (6) was placed in a gear oven at 70°C for 168 hours, and thereafter stickiness of the tube surface was observed visually and by touch, and evaluated according to the following criteria.
- ○:: no stickiness was felt on the molded article surface.
- Δ:: slight stickiness was felt.
- ×:: stickiness was felt, and when the tube was touched by hands, the hands were smeary.
Evaluation criteria: any tube not rated as "x" was defined as pass.

### Raw materials used

### Component (a):

(a-1-1) Styrene-ethylene/propylene-styrene block copolymer "SEPTON 2063 (trade name)" produced by Kuraray Co., Ltd. Content of structural unit derived from styrene: 13% by mass, durometer hardness (value of Type A at 15 seconds): 36, Mw: 65,000, Mw/Mn: 1.3.
(a-1-2) Styrene-ethylene/propylene-styrene block copolymer "SEPTON 4033 (trade name)" produced by Kuraray Co., Ltd. Content of structural unit derived from styrene: 30% by mass, durometer hardness (value of Type A at 15 seconds): 76, Mw: 130,000, Mw/Mn: 1.3.
(a-1-3) Styrene-ethylene/propylene-styrene block copolymer "SEPTON 2104 (trade name)" produced by Kuraray Co., Ltd. Content of structural unit derived from styrene: 65% by mass, durometer hardness (value of Type A at 15 seconds): 98, Mw: 91,000, Mw/Mn: 1.3.
(a-2-1) Hydrogenated product (HSBR) of random copolymer of styrene and conjugated diene compound, "DYNARON 1320P (trade name)" produced by JSR Corporation. Content of structural unit derived from styrene: 10% by mass, durometer hardness (value of Type A at 15 seconds): 41, Mw: 300,000, Mw/Mn: 1.1. The peak of the tensile loss tangent was observed as a single peak around -25°C in the dynamic solid viscoelasticity test performed according to JIS K7244-4:1999.

### Comparative component (a'):

(a'-1) Polyethylene-based plastomer (ethylene/octene-1 random copolymer) "ENGAGE 8150 (trade name)" produced by Dupont Dow Elastomers Japan. Durometer hardness (value of Type A at 15 seconds): 75.

### Component (b):

(b-1) Paraffin oil "PW-90 (trade name)" produced by Idemitsu Kosan Co., Ltd.

### Component (c):

(c-1) Maleic anhydride-modified styrene-ethylene/butene-styrene block copolymer "M1913 (trade name)" produced by Asahi Kasei Chemicals Corporation. Durometer hardness (value of Type A at 15 seconds): 84.
(c-2) Maleic anhydride-modified polyethylene "N493 (trade name)" produced by Dupont.
(c-3) Maleic anhydride-modified polypropylene "Admer QE800 (trade name)" produced by Mitsui Chemicals, Inc.
(c-4) Amine-modified styrene-ethylene/butene-styrene block copolymer "Tuftec MP10 (trade name)" produced by Asahi Kasei Chemicals Corporation.
(c-5) Ethylene glycidyl methacrylate-modified polypropylene "Modiper A4300 (trade name)" produced by NOF Corporation.

### Component (d):

(d-1) Synthetic magnesium hydroxide "Magseeds BN-6 (trade name)" produced by Konoshima Chemical Co., Ltd. Average particle size: 1.0 µm. The particle surface was treated with a fatty acid.
(d-2) Synthetic magnesium hydroxide "Magseeds S-6 (trade name)" produced by Konoshima Chemical Co., Ltd. Average particle size: 1.0 µm. The particle surface was treated with a silane compound and a fatty acid.
(d-3) Synthetic magnesium hydroxide "Kisuma 5P (trade name)" produced by Kyowa Chemical Industry Co., Ltd. Average particle size: 0.82 µm. The particle surface was treated with a silane-based coupling agent.

### Comparative component (d'):

(d'-1) Aluminum hydroxide "H42M (trade name)" produced by SHOWA DENKO K.K. Average particle size: 1.0 µm. The particle surface was treated with a silane compound and a fatty acid.

### Component (e):

(e-1) Magnesium oxide "Rf-50 (trade name)" produced by Ube Material Industries, Ltd. Average particle size: 50 µm. The particle surface was treated with a vinylalkoxysilane.
(e-2) Magnesium silicate (Mg₃Si₄O₁₀(OH)₂) "Talc P-4 (trade name)" produced by Nippon Talc Co., Ltd. Average particle size: 4.5 µm.
(e-3) Magnesium oxide "STARMAG SL-WR (trade name)" produced by Konoshima Chemical Co., Ltd. Average particle size: 9.8 µm.
(e-4) Magnesium oxide "Rf-70 (trade name)" produced by Ube Material Industries, Ltd. Average particle size: 70 µm. The particle surface was treated with vinylalkoxysilane.
(e-5) Magnesium carbonate "MSPS (trade name)" produced by Konoshima Chemical Co., Ltd.
(e-6) Boron nitride "SGB (trade name)" produced by Denka Company Limited.

### Optional resin component (f):

(f1-1) Styrene-modified polyphenylene ether resin (PPO) "Xyron X9102 (trade name)" produced by Asahi Kasei Chemicals Corporation.
(f2-1) Polypropylene-based resin (PP) "FW4BT (trade name)" produced by Japan Polypropylene Corporation. Melting point: 139°C, melt mass flow rate: 6.5 g/10 min.
(f3-1) Ethylene-vinyl acetate copolymer "V9000 (trade name)" produced by Du Pont-Mitsui Polychemicals Co., Ltd. Content of structural unit derived from vinyl acetate: 41% by mass, durometer hardness (value of Type A at 15 seconds): 54.

**[Table 1]**

| | | Example 1 | Example 2 | Example 3 | Example 4 | Example 5 | Example 6 | Example 7 |
|---|---|---|---|---|---|---|---|---|
| Composition (parts by mass) | a-1-1 | 30 | | | | 40 | 42 | 30 |
| | a-1-2 | 23 | 25 | 15 | 25 | | 35 | 23 |
| | a-2-1 | | 25 | 35 | | | | |
| | b-1 | 47 | 50 | 50 | 75 | 60 | 23 | 47 |
| | c-1 | 3 | 3 | 3 | 3 | 4 | 3 | 0.5 |
| | c-2 | | | | | | | |
| | c-3 | | | | | | | |
| | c-4 | | | | | | | |
| | c-5 | | | | | | | |
| | d-1 | 300 | 320 | 320 | 320 | 390 | 300 | 300 |
| | e-1 | 150 | 160 | 160 | 160 | 195 | 150 | 150 |
| Evaluation results | Productivity | ○ | ○ | ○ | ○ | ○ | ○ | ○ |
| | Torque of twin screw extruder | ○ | ○ | ○ | ○ | ○ | ○ | ○ |
| | Electrical insulation | ≥10^14 | ≥10^14 | ≥10^14 | ≥10^14 | ≥10^14 | ≥10^14 | ≥10^14 |
| | Thermal conductivity | 1.56 | 1.40 | 1.40 | 1.40 | 1.54 | 1.60 | 1.58 |
| | Flame retardancy | V-0 | V-0 | V-0 | V-0 | V-0 | V-0 | V-0 |
| | Extrusion molding processability: Uneven thickness | ○ | ○ | ○ | ○ | ○ | ○ | ○ |
| | Extrusion torque | ○ | ○ | ○ | ○ | ○ | ○ | ○ |
| | Appearance of molded article | ○ | ○ | ○ | ○ | ○ | ○ | ○ |
| | Flexibility | ○ | ○ | ○ | ○ | ○ | ○ | ○ |
| | High-temperature deformation | ○ | ○ | ○ | ○ | ○ | ○ | ○ |
| | Low-temperature flexibility | ○ | ○ | ○ | ○ | ○ | ○ | ○ |
| | Electrolytic solution resistance 80°C | ○ | ○ | ○ | ○ | Δ | ○ | ○ |
| | Durometer hardness | 69 | 69 | 71 | 67 | 55 | 77 | 68 |
| | Bleed-out resistance | ○ | ○ | ○ | Δ | ○ | ○ | ○ |

**[Table 2]**

| | | Example 8 | Example 9 | Example 10 | Example 11 | Example 12 | Example 13 | Example 14 |
|---|---|---|---|---|---|---|---|---|
| compounding composition (parts by mass) | a-1-1 | 30 | 30 | 30 | 30 | 30 | 30 | 30 |
| | a-1-2 | 23 | 23 | 23 | 23 | 23 | 23 | 23 |
| | a-2-1 | | | | | | | |
| | b-1 | 47 | 47 | 47 | 47 | 47 | 47 | 47 |
| | c-1 | 10 | | | | | 3 | 3 |
| | c-2 | | 3 | | | | | |
| | c-3 | | | 3 | | | | |
| | c-4 | | | | 3 | | | |
| | c-5 | | | | | 3 | | |
| | d-1 | 300 | 300 | 300 | 300 | 300 | 380 | 260 |
| | e-1 | 150 | 150 | 150 | 150 | 150 | 150 | 150 |
| Evaluation results | Productivity | ○ | ○ | ○ | ○ | ○ | ○ | ○ |
| | Torque of twin screw extruder | ○ | ○ | ○ | ○ | ○ | ○ | ○ |
| | Electrical insulation | ≥10^14 | ≥10^14 | ≥10^14 | ≥10^14 | ≥10^14 | ≥10^14 | ≥10^14 |
| | Thermal conductivity | 1.50 | 1.54 | 1.57 | 1.58 | 1.54 | 1.65 | 1.59 |
| | Flame retardancy | V-0 | V-0 | V-0 | V-0 | V-0 | V-0 | V-0 |
| | Extrusion molding processability: Uneven thickness | ○ | ○ | ○ | ○ | ○ | ○ | ○ |
| | Extrusion torque | ○ | ○ | ○ | ○ | ○ | ○ | ○ |
| | Appearance of molded article | ○ | ○ | ○ | ○ | ○ | ○ | ○ |
| | Flexibility | ○ | ○ | ○ | ○ | ○ | ○ | ○ |
| | High-temperature deformation | ○ | ○ | ○ | ○ | ○ | ○ | ○ |
| | Low-temperature flexibility | ○ | ○ | ○ | ○ | ○ | ○ | ○ |
| | Electrolytic solution resistance 80°C | ○ | ○ | ○ | ○ | ○ | ○ | ○ |
| | Durometer hardness | 78 | 71 | 73 | 69 | 67 | 75 | 65 |
| | Bleed-out resistance | ○ | ○ | ○ | ○ | ○ | ○ | ○ |

**[Table 3]**

| | | Example 15 | Example 16 | Example 17 | Example 18 | Example 19 | Example 20 |
|---|---|---|---|---|---|---|---|
| Composition (parts by mass) | a-1-1 | 30 | 30 | 30 | 30 | 40 | 30 |
| | a-1-2 | 23 | 23 | 23 | 23 | | 23 |
| | b-1 | 47 | 47 | 47 | 47 | 60 | 47 |
| | c-1 | 3 | 3 | 3 | 3 | 4 | 3 |
| | d-1 | | | 300 | 300 | 390 | 380 |
| | d-2 | 300 | | | | | |
| | d-3 | | 300 | | | | |
| | e-1 | 150 | 150 | 190 | 130 | 30 | |
| Evaluation results | Productivity | ○ | ○ | ○ | ○ | ○ | ○ |
| | Torque of twin screw extruder | ○ | ○ | ○ | ○ | ○ | ○ |
| | Electrical insulation | ≥10^14 | ≥10^14 | ≥10^14 | ≥10^14 | ≥10^14 | ≥10^14 |
| | Thermal conductivity | 1.56 | 1.53 | 1.65 | 1.44 | 1.26 | 1.25 |
| | Flame retardancy | V-0 | V-0 | V-0 | V-0 | V-0 | V-0 |
| | Extrusion molding processability: Uneven thickness | ○ | ○ | ○ | ○ | ○ | ○ |
| | Extrusion torque | ○ | ○ | ○ | ○ | ○ | ○ |
| | Appearance of molded article | ○ | ○ | ○ | ○ | ○ | ○ |
| | Flexibility | ○ | ○ | ○ | ○ | ○ | ○ |
| | High-temperature deformation | ○ | ○ | ○ | ○ | ○ | ○ |
| | Low-temperature flexibility | ○ | ○ | ○ | ○ | ○ | ○ |
| | Electrolytic solution resistance 80°C | ○ | ○ | ○ | ○ | Δ | ○ |
| | Durometer hardness | 69 | 67 | 71 | 67 | 40 | 68 |
| | Bleed-out resistance | ○ | ○ | ○ | ○ | ○ | ○ |

**[Table 4]**

| | | Example 21 | Example 22 | Example 23 | Example 24 | Example 25 | Example 26 |
|---|---|---|---|---|---|---|---|
| Composition (parts by mass) | a-1-1 | 30 | 30 | 30 | 30 | 30 | 30 |
| | a-1-2 | 23 | 23 | 23 | 23 | 23 | 23 |
| | b-1 | 47 | 47 | 47 | 47 | 47 | 47 |
| | c-1 | 3 | 3 | 3 | 3 | 3 | 3 |
| | d-1 | 300 | 300 | 300 | 300 | 300 | 250 |
| | e-1 | | | | | | |
| | e-2 | 150 | | | | | |
| | e-3 | | 150 | | | | |
| | e-4 | | | 150 | | | |
| | e-5 | | | | 150 | | |
| | e-6 | | | | | 150 | |
| Evaluation results | Productivity | ○ | ○ | ○ | ○ | ○ | ○ |
| | Torque of twin screw extruder | ○ | ○ | ○ | ○ | ○ | ○ |
| | Electrical insulation | ≥10^14 | ≥10^14 | ≥10^14 | ≥10^14 | ≥10^14 | ≥10^14 |
| | Thermal conductivity | 1.43 | 1.40 | 1.70 | 1.40 | 1.40 | 1.20 |
| | Flame retardancy | V-0 | V-0 | V-0 | V-0 | V-0 | V-0 |
| | Extrusion molding processability: Uneven thickness | ○ | ○ | ○ | ○ | ○ | ○ |
| | Extrusion torque | ○ | ○ | ○ | ○ | ○ | ○ |
| | Appearance of molded article | ○ | ○ | ○ | ○ | ○ | ○ |
| | Flexibility | ○ | ○ | ○ | ○ | ○ | ○ |
| | High-temperature deformation | ○ | ○ | ○ | ○ | ○ | Δ |
| | Low-temperature flexibility | ○ | ○ | ○ | ○ | ○ | ○ |
| | Electrolytic solution resistance 80°C | ○ | ○ | ○ | ○ | ○ | ○ |
| | Durometer hardness | 72 | 69 | 71 | 69 | 67 | 62 |
| | Bleed-out resistance | ○ | ○ | ○ | ○ | ○ | ○ |

**[Table 5]**

| | | Example 27 | Example 28 | Example 29 | Example 30 | Example 31 | Example 32 |
|---|---|---|---|---|---|---|---|
| Composition (parts by mass) | a-1-1 | | | 25 | 25 | 25 | |
| | a-1-2 | | 5 | 25 | 25 | 25 | 30 |
| | a-1-3 | | | | | | 23 |
| | a-2-1 | 80 | 48 | | | | |
| | b-1 | 20 | 47 | 50 | 50 | 50 | 47 |
| | c-1 | 3 | 3 | 3 | 3 | 3 | 3 |
| | d-1 | 250 | 250 | 320 | 320 | 320 | 300 |
| | e-1 | 50 | 50 | 160 | 160 | 160 | 150 |
| | f1-1 | | | | | 7.5 | |
| | f2-1 | | | | 7.5 | | |
| | f3-1 | | | 7.5 | | | |
| Evaluation results | Productivity | ○ | ○ | ○ | ○ | ○ | ○ |
| | Torque of twin screw extruder | ○ | ○ | ○ | ○ | ○ | ○ |
| | Electrical insulation | ≥10^14 | ≥10^14 | ≥10^14 | ≥10^14 | ≥10^14 | ≥10^14 |
| | Thermal conductivity | 1.30 | 1.30 | 1.56 | 1.56 | 1.56 | 1.56 |
| | Flame retardancy | V-0 | V-0 | V-0 | V-0 | V-0 | V-0 |
| | Extrusion molding processability: Uneven thickness | ○ | ○ | ○ | ○ | ○ | ○ |
| | Extrusion torque | ○ | ○ | ○ | ○ | ○ | ○ |
| | Appearance of molded article | ○ | ○ | ○ | ○ | ○ | ○ |
| | Flexibility | ○ | ○ | ○ | ○ | ○ | ○ |
| | High-temperature deformation | ○ | ○ | ○ | ○ | ○ | ○ |
| | Low-temperature flexibility | ○ | ○ | ○ | ○ | ○ | ○ |
| | Electrolytic solution resistance 80°C | ○ | ○ | ○ | ○ | - | ○ |
| | Electrolytic solution resistance 100°C | - | - | - | - | ○ | - |
| | Durometer hardness | 76 | 73 | 69 | 74 | 75 | 78 |
| | Bleed-out resistance | ○ | Δ | ○ | ○ | ○ | ○ |

**[Table 6]**

| | | Comparative Example 1 | Comparative Example 2 | Comparative Example 3 | Comparative Example 4 | Comparative Example 5 | Comparative Example 6 |
|---|---|---|---|---|---|---|---|
| | a-1-1 | | | | | | 30 |
| | a-1-2 | | | | | 23 | 23 |
| | a-1-3 | | | | | | |
| | a-2-1 | 100 | 100 | 100 | 100 | | |
| | a'-1 | | | | | 30 | |
| Composition (parts by mass) | b-1 | | | | | 47 | 47 |
| | c-1 | | | | | 3 | |
| | d-1 | 300 | 340 | 280 | 280 | 300 | 300 |
| | e-1 | 150 | | | 80 | 150 | 150 |
| | f1-1 | | | | | | |
| | f2-1 | | 5 | 5 | 5 | | |
| | f3-1 | | | | | | |
| | Productivity | × | ○ | ○ | ○ | ○ | ○ |
| | Torque of twin screw extruder | × | × | × | × | × | × |
| | Electrical insulation | ≥10^14 | ≥10^14 | ≥10^14 | ≥10^14 | ≥10^14 | ≥10^14 |
| | Thermal conductivity | 1.55 | 0.85 | 0.80 | 0.82 | 1.56 | 1.60 |
| | Flame retardancy | V-0 | V-0 | V-0 | V-0 | V-0 | V-0 |
| | Extrusion molding processability: Uneven thickness | × | ○ | ○ | ○ | ○ | Δ |
| Evaluation results | Extrusion torque | × | × | Δ | × | Δ | × |
| | Appearance of molded article | × | ○ | ○ | ○ | ○ | Δ |
| | Flexibility | × | × | Δ | × | × | ○ |
| | High-temperature deformation | Omitted | Omitted | Δ | Omitted | Omitted | ○ |
| | Low-temperature flexibility | Omitted | Omitted | Δ | Omitted | Omitted | Δ |
| | Electrolytic solution resistance 80°C | ○ | ○ | ○ | ○ | × | ○ |
| | Durometer hardness | 86 | 81 | 78 | 81 | 82 | 69 |
| | Bleed-out resistance | ○ | ○ | ○ | ○ | × | ○ |

**[Table 7]**

| | | Comparative Example 7 | Comparative Example 8 | Comparative Example 9 | Comparative Example 10 | Comparative Example 11 | Comparative Example 12 |
|---|---|---|---|---|---|---|---|
| | a-1-1 | 30 | | 30 | 30 | 30 | 30 |
| | a-1-2 | 23 | 17 | 23 | 23 | 23 | 23 |
| | b-1 | 47 | 83 | 15 | 47 | 47 | 47 |
| Composition (parts by mass) | c-1 | 15 | 3 | 3 | 3 | 3 | 3 |
| | d-1 | 300 | 300 | 300 | | 220 | 430 |
| | d-2 | | | | | | |
| | d-3 | | | | | | |
| | d'-1 | | | | 300 | | |
| | e-1 | 150 | 150 | 150 | 150 | 150 | 150 |
| | Productivity | ○ | ○ | ○ | × | ○ | Δ |
| | Torque of twin screw extruder | ○ | ○ | Δ | Δ | ○ | × |
| | Electrical insulation | ≥10^14 | ≥10^14 | ≥10^14 | ≥10^14 | ≥10^14 | ≥10^14 |
| | Thermal conductivity | 1.15 | 1.46 | 1.56 | 1.45 | 1.40 | 1.75 |
| | Flame retardancy | Outside rating | Outside rating | V-0 | Outside rating | Outside rating | V-0 |
| | Extrusion molding processability: Uneven thickness | ○ | Δ | ○ | × | ○ | × |
| Evaluation results | Extrusion torque | Δ | ○ | Δ | Δ | ○ | × |
| | Appearance of molded article | ○ | Δ | ○ | Δ | ○ | Δ |
| | Flexibility | ○ | ○ | Δ | Δ | ○ | × |
| | High-temperature deformation | ○ | Δ | Omitted | ○ | Δ | Omitted |
| | Low-temperature flexibility | Δ | ○ | Omitted | Δ | ○ | Omitted |
| | Electrolytic solution resistance 80°C | ○ | Δ | ○ | ○ | ○ | ○ |
| | Durometer hardness | 85 | 50 | 82 | 73 | 62 | 82 |
| | Bleed-out resistance | ○ | × | ○ | ○ | ○ | ○ |

The thermoplastic elastomer composition of the present invention exhibits flame retardancy, high thermal conductivity, electrical insulation, electrolytic solution resistance, flexibility, flexibility at low temperatures, productivity of the composition, and extrusion molding processability in a well-balanced manner, and can be suitably used in a battery pack protection member. On the other hand, the thermoplastic elastomer composition in each of Comparative Examples is poor in at least any one of flame retardancy, high thermal conductivity, electrical insulation, electrolytic solution resistance, flexibility, flexibility at low temperatures, productivity of the composition, and extrusion molding processability, and is insufficient for use in a battery pack protection member.

## Claims

1. A thermoplastic elastomer composition for a battery pack protection member, comprising:
100 parts by mass of a resin composition comprising
(a) 20 to 80% by mass of a hydrogenated product of a copolymer of an aromatic vinyl compound and a conjugated diene compound, and
(b) 80 to 20% by mass of a softening material for non-aromatic rubber,
wherein the total of the component (a) and the component (b) is 100% by mass;
(c) 0.1 to 10 parts by mass of a modified resin; and
(d) 250 to 400 parts by mass of magnesium hydroxide.

2. Thermoplastic elastomer composition according to claim 1, wherein the component (c) comprises a hydrogenated product of a copolymer of an aromatic vinyl compound and a conjugated diene compound, modified by use of maleic anhydride.

3. Thermoplastic elastomer composition according to claim 1 or 2, wherein the component (a) comprises:
(a-1) 20 to 100% by mass of a hydrogenated product of a block copolymer of styrene and a conjugated diene compound, in which the content of a structural unit derived from styrene is 5 to 40% by mass, and
(a-2) 80 to 0% by mass of a hydrogenated product of a random copolymer of styrene and a conjugated diene compound, in which the content of a structural unit derived from styrene is 5 to 40% by mass, and
wherein the total of the component (a-1) and the component (a-2) is 100% by mass.

4. Thermoplastic elastomer composition according to any one of claims 1 to 3, further comprising
(e) 25 to 200 parts by mass of a thermally conductive filler comprising one or more selected from the group consisting of magnesium oxide, magnesium silicate, magnesium carbonate and boron nitride, based on 100 parts by mass of the resin composition.

5. A battery comprising the thermoplastic elastomer composition according to any one of claims 1 to 4.
